# EUROPÄISCHE PATENTSCHRIFT

(11) **EP 0 944 424 B1**
(45) Veröffentlichungstag und Bekanntmachung des Hinweises auf die Patenterteilung: **16.07.2003**
(21) Anmeldenummer: 97941920.7
(22) Anmeldetag: 07.08.1997
(51) Int. Cl.: B01D 53/04, B01D 53/94, F01N 3/08

(54) **FREMDGEZÜNDETE BRENNKRAFTMASCHINE MIT EINEM NOx-ADSORBER**
SPARK-IGNITED INTERNAL COMBUSTION ENGINE WITH AN NOx-ADSORBER
MOTEUR A COMBUSTION INTERNE A ALLUMAGE PAR ETINCELLE COMPORTANT UN ADSORBANT DE NOx

(30) Priorität: 19.08.1996 DE 19633049
(43) Veröffentlichungstag der Anmeldung: 29.09.1999
(60) Teilanmeldung: 03008344.8
(73) Patentinhaber: Volkswagen Aktiengesellschaft, 38436 Wolfsburg (DE)
(72) Erfinder: HELD, Wolfgang, D-38448 Wolfsburg (DE)
(74) Vertreter: Pohlmann, Bernd Michael
(86) Internationale Anmeldenummer: EP9704307
(87) Internationale Veröffentlichungsnummer: WO98007497

(56) Entgegenhaltungen:
- EP-A- 0 540 280
- EP-A- 0 580 389
- EP-A- 0 718 478
- DE-A- 4 339 025
- DE-C- 4 319 294
- US-A- 5 607 650

## Beschreibung

Die Erfindung betrifft eine fremdgezündete Brennkraftmaschine oder Dieselbrennkraft maschine gemäß dem Oberbegriff des Patentanspruchs 1 sowie ein Verfahren zur Steuerung eines in einem Abgasstrang einer fremdgezündeten Brennkraftmaschine oder einer Dieselbrennkraftmaschine angeordneten Absorbers.

Aus der US 4,755,499 ist die reversible Speicherung von Stickoxiden und Schwefeloxiden z. B. aus Abgasen von Kraftfahrzeugen bekannt, wobei der Absorber durch Erhitzen in einer reduzierenden Atmosphäre regeneriert wird. Hierbei tritt gleichzeitig eine Reduktion der Stickoxide ein.

Ein solcher Speicherkatalysator ist in der EP 0 580 389 A für den Einsatz bei Kraftfahrzeugen näher beschrieben, wobei auch hier hohe Temperaturen (über 500 °C) für die Regeneration des Absorbers notwendig sind. Hierdurch ist der Einsatz des Speicherkatalysators nur bei Kraftfahrzeugen möglich, die eine hohe Abgastemperatur haben, d. h. insbesondere bei Kraftfahrzeugen mit einem Otto-Motor. Jedoch ist auch hier der Einsatz nur bedingt möglich, da unter bestimmten Betriebsbedingungen der Verbrennungskraftmaschine, wie sie beispielsweise im Stadtverkehr gegeben sind, durch die Beschleunigungsphasen ein hoher Stickoxidausstoß erfolgt, nicht jedoch lang anhaltend eine hohe Temperatur erreicht wird, die für die Regeneration des Absorbers, insbesondere von Schwefeloxiden, erforderlich ist.

Aufgabe der Erfindung ist es, einen insbesondere für den Einsatz mit Dieselbrennkraftmaschinen bzw. direkteinspritzenden Otto-Motoren geeigneten Absorber für Stickoxide sowie ein entsprechendes Verfahren zur Verfügung zu stellen, mit denen auch bei niedrigen Abgastemperaturen ein Regenerieren des Absorbers möglich sein soll.

Bei dem eingangs beschriebenen Absorber wird diese Aufgabe gelöst mit den kennzeichnenden Merkmalen des Anspruchs 1, hinsichtlich des Verfahrens wird die Aufgabe gelöst mit dem Verfahren gemäß Anspruch 21.

Die Unteransprüche zeigen bevorzugte Ausführungsformen, mit denen insbesondere auch bei sehr niedrigen Abgastemperaturen, wie sie beispielsweise bei direkteinspritzenden Verbrennungskraftmaschinen vorliegen, ein Regenerieren des Absorbers ermöglicht ist.

Erfindungsgemäß können die üblichen absorbierenden Materialien eingesetzt werden, wie sie beispielsweise in der US 4,755,499, aber auch in der EP 0 580 389 A oder WO 94-04258 beschrieben sind. All diesen Speichermaterialien ist gemeinsam, daß sie eine erhöhte Arbeitstemperatur haben, wobei insbesondere beim Regenerieren (insbesondere beim Entfernen der Schwefeloxide) eine noch höhere Temperatur erforderlich ist. Bei den meisten Speichermedien dieser Art werden Temperaturen im Bereich von 150°C bis 700 °C, insbesondere Temperaturen oberhalb 300 °C benötigt. Solche Temperaturen treten bei Kraftfahrzeugen mit Otto-Motoren üblicherweise auf, sind jedoch bei Dieselkraftfahrzeugen und insbesondere bei direkteinspritzenden Verbrennungskraftmaschinen verhältnismäßig selten.

Die bevorzugten NOx-Speichermaterialien zeichnen sich also dadurch aus, daß sie unter nettooxidierenden Bedingungen (stöchiometrischer Überschuß an Oxidationsmitteln), wie sie im Abgas von Mager-Motoren vorliegen, Stickoxide zwischenspeichern und bei einer Verringerung des Sauerstoffüberschusses reduzieren können. Hierzu sind die NOx-Speicherkatalysatoren üblicherweise auch edelmetallbeschichtet, insbesondere mit den üblichen Edelmetallbeschichtungen für Dreiwegekatalysatoren. Die Regeneration des mit NOx beladenen Speichermaterials erfolgt dann vorteilhaft bei λ ≤ 1 in einer Regenerierphase.

Üblicherweise laufen an den NOx-Speicherkatalysatoren verschiedene Reaktionen nacheinander bis gleichzeitig ab, wobei die wichtigsten Reaktionen
- Oxidation des NO im Abgas zur NO₂
- Speicherung des NO₂ als Nitrat
- Zersetzung des Nitrats
- Reduktion des zurückgebildeten NO₂ zu Stickstoff und Sauerstoff
sind.

Wie oben beschrieben, ist der Verlauf der Reaktionen unter anderem abhängig von der Temperatur des Katalysators, aber auch von der Konzentration der Reaktionspartner am aktiven Zentrum des Katalysators und der Strömungsgeschwindigkeit des Gases.

Erfindungsgemäß hat es sich nun gezeigt, daß mit verschiedenen Faktoren, die miteinander kombinierbar sind, es auch mit nur geringem Aufwand möglich ist, die bekannten Abgasabsorber zu optimieren, so daß sie insbesondere für direkteinspritzende Verbrennungskraftmaschinen eingesetzt werden können. Die wesentlichen Merkmale sind hierbei:
- Verwendung von Metallträgern, vorteilhaft mit einer Wandstärke ≤ 50 µm, vorzugsweise ≤ 40 µm und insbesondere ≤ 30 µm; und/oder
- Heizen des Absorbers auf eine Temperatur oberhalb der Temperatur des Abgasstromes.

Erfindungsgemäß sind Absorber mit einem Trägerkörper aus Metallfolie geeignet, wobei die Metallfolie vorteilhaft noch als Widerstandsheizung geschaltet werden kann, so daß auch bei niedrigen Abgastemperaturen der Absorber auf die notwendige Regenerationstemperatur durch Leiten eines elektrischen Stromes durch den Metallträgerkörper gebracht werden kann. Außerdem lassen sich bei der Verwendung eines Metallträgerkörpers die Kanäle, die mit der Absorptionsschicht beschichtet sind, unterschiedlich gestalten, so daß beispielsweise eine Verwirbelung (turbulente Strömung) des Abgasstromes in den Kanälen gezielt einstellbar ist.

Besonders vorteilhaft werden erfindungsgemäß für den Absorber Trägerkörper mit unterschiedlichen Kanalabschnitten eingesetzt, wobei z. B. ein mittlerer Bereich der Kanäle zur Erzielung einer turbulenten Strömung verändert ist. Dies ist beispielsweise durch eine Veränderung des Kanalquerschnitts oder aber durch eine Verdrehung bzw. Verwindung der Kanäle möglich. Hierdurch läßt sich der Trägerkörper gezielt für besonders günstige Reaktionsbedingungen entlang der Strömungskanäle anpassen. Eine weitere Besonderheit des Trägerkörpers ist neben der möglichen unterschiedlichen Zahl an Kanälen in Strömungsrichtung und dem Einbringen von Querschnittsänderungen entlang der Strömungsrichtung auch das Segmentieren des Trägerkörpers, wobei z. B. ein Segment mit Absorptionsschicht nahe des Motorauslasses und ein weiteres Segment mit Absorptionsschicht etwas entfernter angeordnet wird. Hierdurch lassen sich auch bei unterschiedlichsten Fahrbedingungen auch bei verbrauchsoptimierten Motoren gute NOx-Reinigungswerte erzielen.

Erfindungsgemäß hat es sich gezeigt, daß der NOx-Speicher besonders gute Absorptionsund Desorptionseigenschaften hat, wenn die Strömungskanäle für das Abgas in einem mittleren Bereich zur Erzielung einer turbulenten Strömung verwirbelt sind, wohingegen der Einlaßbereich und der Auslaßbereich nicht diese eine turbulente Strömung besonders begünstigende Struktur haben. Als einfachstes Mittel zur Erzeugung einer solchen turbulenten Strömung ist beispielsweise ein Übergang von einem großen zu einem kleinen Durchmesser in den Kanälen, jedoch auch eine Verdrehung des gesamten Körpers in diesem Bereich ist geeignet zur Erzeugung der Turbulenzen. Die besonders günstigen Eigenschaften werden vermutlich durch eine Trennung der einzelnen Reaktionsschritte zur Stickoxidreduktion auf einzelne Segmente des Trägerkörpers erreicht, wobei der veränderte mittlere Bereich gegenüber dem unveränderten mittleren Bereich bessere Reaktionsbedingungen gewährleistet.

Für die Erzielung besonders guter Umsätze hat die Absorptionsschicht eine vergrößerte Oberfläche von mindestens 20 m²/g, insbesondere mindestens 40 m²/g. Vorteilhaft hat die Absorptionsschicht vorzugsweise ein Porenvolumen von mindestens 0,2 cm³/g und insbesondere mindestens 0,4 cm³/g, wobei auch eine bimodale Porengrößenverteilung geeignet ist mit Mikroporen und Makroporen. Dies wird beispielsweise durch die Wahl einer bestimmten Partikelgröße für die Bildung der Absorberoberfläche erreicht, wobei auch Mischungen oder bestimmte Verteilungen unterschiedlicher Partikelgrößen geeignet sind.

Als Absorptionsoberfläche eignet sich insbesondere γ-Aluminiumoxid, das mit einem oder mehreren Elementen aus der Gruppe der Alkalimetalle, Erdalkalimetalle, seltenen Erden und/oder Lanthan beladen ist. Auch Kupfer und Mangan sind geeignete Elemente. Die Elemente liegen üblicherweise als Oxid, aber auch als Carbonat oder Nitrat vor, wobei die Speicherwirkung durch Bildung entsprechender Nitrate und Sulfate erzielt wird, die dann unter den entsprechenden Reaktionsbedingungen wieder zu Oxiden oder Carbonaten überführt werden. Hierdurch ist es möglich, NOx und/oder SOx insbesondere aus einem Abgas, das mindestens 1 % Sauerstoff enthält, zu absorbieren.

Wie beschrieben, werden die absorbierten Stoffe insbesondere durch erhöhte Temperaturen und in reduzierender Atmosphäre wieder freigesetzt. Hierzu ist es vorteilhaft, wenn im Abgas die Sauerstoffkonzentration ermittelt wird, wobei dann die Sauerstoffkonzentration oder eine mit der Sauerstoffkonzentration in bekannter Beziehung stehende Größe zur Steuerung des Absorptions- bzw. Desorptionsvorganges herangezogen werden kann. Entsprechendes gilt auch für die Temperatur des Abgasstroms, wobei entscheidend die Temperatur der Absorptionsschicht ist, die unmittelbar oder mittelbar bestimmt wird. So kann die Temperatur beispielsweise durch Messung der Temperatur des Abgasstroms bzw. des Trägerkörpers gemessen werden; auch eine Temperaturbestimmung über ein Kennfeld der Verbrennungskraftmaschine ist möglich.

Mit der vorliegenden Erfindung lassen sich Absorptionsschichten in einer Dicke von mindestens 50 µm, insbesondere mindestens 70 µm und besonders vorteilhaft mindestens 90 µm herstellen (durchschnittliche Schichtdicke eines Querschnitts; Werte gelten für Keramik, bei Metall gelten die halben Werte) wobei sich diese Schichtdicke der Absorptionsschicht über vorzugsweise mindestens 50% und insbesondere mindestens 80% des Absorbers erstreckt. Solche Schichtdicken ermöglichen gegenüber den herkömmlichen Absorbem eine höhere Speicherkapazität und damit die oben beschriebenen längeren Intervalle bis zur Regeneration.

Gemäß dem mit zur Erfindung gehörenden Verfahren kann das Regenerieren vorteilhaft dann erfolgen, wenn die Betriebsbedingungen der Verbrennungskraftmaschine eine entsprechend hohe Temperatur des Abgasstroms und damit der Absorptionsschicht bewirken. Erfindungsgemäß ist jedoch eine Zusatzheizung der Absorptionsschicht vorgesehen, die insbesondere über die Gemischbildung, aber auch elektrisch erfolgt. Bevorzugte Beheizungsmaßnahmen sind Zündungsmaßnahmen, Veränderung des λ, Absenken des λ auf < 1 und Senkundärluftzugabe zum Erzeugen von Exothermie an einem Oxidationskatalysator bzw. über eine Zündeinrichtung sowie Beheizen des Katalysators durch einen Brenner. Besonders vorteilhaft ist hierbei wieder ein segmentierter Absorber, der dann reaktionsspezifisch beheizt wird. So kann beispielsweise nur ein stromabwärts angeordneter Absorberbereich beheizt werden, insbesondere bei einer deutlichen räumlichen Trennung der Absorbersegmente (siehe oben). Auch hier ist die-elektrische Beheizung wieder besonders vorteilhaft, aber auch eine Kraftstoffeinspritzung in den Abgasstrom bzw. ein Brenner. Durch die Anordnung einzelner Segmente für Einzelreaktionen in unterschiedlichem Abstand zum Auslaßventil in motomaher und motorfemer Position läßt sich außerdem eine thermische Alterung des Absorbers vermindern (neben dem Vorteil der besonders günstigen Reaktionstemperaturen in einzelnen Absorberbereichen).

Da für die Freisetzung und Umsetzung des NOx aus dem Speicher und die Freisetzung der Schwefeloxide aus dem Speicher unterschiedliche Temperaturen notwendig sind (beim letzteren höhere), kann außerdem so verfahren werden, daß eine Desorption der Schwefeloxide (die insbesondere als Sulfat vorliegen) in größeren Zeitspannen bzw. bei Bedarf vorgenommen wird, so daß der Speicher nur gelegentlich auf die hohen Temperaturen erhitzt wird, die für eine Desorption der Schwefeloxide notwendig sind. Auch hierdurch wird einer frühzeitigen Alterung des Speichers entgegengewirkt, so daß eine besonders gute Langzeitstabilität des Absorbers erreicht wird. Im übrigen bedient sich das Verfahren der oben bei dem Absorber und im Ausführungsbeispiel beschriebenen Maßnahmen, wie auch die beim Verfahren und im Ausführungsbeispiel beschriebenen Merkmale bei dem eingangs beschriebenen Absorber eingesetzt werden können.

Die Erfindung wird im folgenden anhand eines Ausführungsbeispiels und einer Zeichnung näher beschrieben.

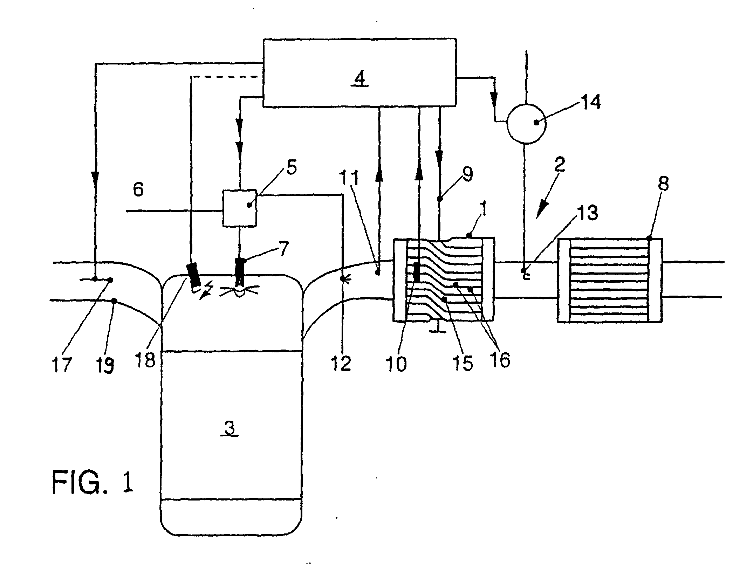

Die Zeichnung zeigt den Absorber in einem Abgassystem einer Brennkraftmaschine (Ottomotor).

Ein Absorber 1 sitzt in einem Abgasstrang 2 einer fremdgezündeten Verbrennungskraftmaschine 3 mit direkter Kraftstoffeinspritzung, deren Betrieb über ein Motormanagement gesteuert wird. Das Motormanagement 4 wirkt hierzu auf eine Einspritzpumpe 5, die Kraftstoff von einem (nicht dargestellten) Tank 6 zu einer Einspritzdüse 7 fördert. Außerdem erfolgt über das Motormanagement 4 über die Zündkerze 18 auch die Zündung des Kraftstoff-Luftgemisches im Zylinder (wobei die Zündspule nicht dargestellt ist). Übersichtshalber sind die verschiedensten zu dem Motormanagement 4 führenden üblichen Zu- und Ableitungen nicht dargestellt.

In dem Abgasstrang 2 ist ferner noch ein Dreiwegekatalysator 8 stromabwärts von dem Absorber 1 angeordnet, auch eine Anordnung des Dreiwegekatalysators 8 stromaufwärts des Absorbers 1 ist möglich.

Der Absorber 1 ist aus zwei Metallfolien aufgebaut, von denen die eine gewellt mit einer glatten Folie verbunden (an den Wellenbergen verlötet) ist. Durch Zusammenrollen dieser mehrtagigen Folie erhält man einen zylindrischen Körper mit einer Vielzahl von sich in ihm axial erstreckenden Kanälen. Femer wurde der Trägerkörper des Absorbers in einem mittleren Bereich 15 um seine Längsachse gedreht, so daß hier die einzelnen Kanäle 16 verengt und gewunden sind. Eine ähnlich wirkende Turbulenzen bildende Struktur läßt sich auch mit einer Querwellung in einer oder beiden der Metallfolien erreichen.

Die Metallfolie enthält wenige Prozent Aluminium und wird anoxidiert, damit ein γ-aluminiumoxidhaltiger washcoat besser auf der Metallfolie haftet. Der Aluminiumoxidwashcoat enthält ferner die Elemente Natrium, Barium, Cer und Lanthan, die als Salze (Nitrate, Oxide, Hydrooxide) auf das Aluminiumoxid aufgezogen sind. Durch Tränken des gewickelten Trägerkörpers mit dem washcoat und anschließendes Brennen erhält man den Absorber. Zusätzlich wird der Absorber mit einer platin- und rhodiumhaltigen Lösung (zusätzlich oder anstatt des Rhodiums kann die Lösung auch Palladium enthalten) getränkt, aus der dann die entsprechenden Edelmetalle als solche freigesetzt werden. Diese Edelmetallbeschichtung entspricht einer Dreiwegekatalysator-Beschichtung. Der so erhaltene Absorber wird elektrisch kontaktiert und so in ein Gehäuse eingesetzt, daß ein Stromfluß durch ihn gegen Masse (das Gehäuse) möglich ist. Die elektrische Kontaktierung 9 ist anderenends mit der Steuerung 4 verbunden. Außerdem ist in den Trägerkörper noch ein Temperaturfühler 10 eingesetzt, der ebenfalls zu der Steuerung 4 führt.

Stromaufwärts von dem Absorber 1 ist eine Breitbandlambdasonde 11 in das Abgasrohr eingesetzt, die wiederum ihre der im Abgasstrom vorliegenden Sauerstoffkonzentration proportionalen Werte an die Steuerung 4 weitergibt. Außerdem ist stromaufwärts der Lambdasonde 11 eine Kraftstoffeinspritzung 12 vorgesehen, die entsprechend von Steuerbefehlen aus der Steuerung 4 mit Kraftstoff versorgt wird. Zwischen dem Absorber 1 und dem nachgeschalteten Katalysator 8 ist eine Lufteindüsung 13 vorgesehen, die Luft von einer von der Steuerung 4 gesteuerten Pumpe 14 erhält.

Die Verbrennungskraftmaschine 3 ist vom Typ eines direkteinspritzenden Ottomotors, dessen Abgasstrom normalerweise einen hohen Sauerstoffüberschuß und eine Temperatur um 200 °C bis 500 °C hat.

Im Betrieb der Brennkraftmaschine werden im Abgas vorhandene Stickoxide und Oxide des Schwefels in der Absorptionsschicht des Absorbers 1 eingelagert, wobei gleichzeitig eventuell vorhandene oxidierbare Bestandteile (meist Kohlenwasserstoffe) durch die Edelmetallbeschichtung des Absorbers 1 oxidiert werden. Bei Erreichen der Sättigungsgrenze oder aber in vorbestimmten Zeitintervallen (auch andere Steuerungsgrößen sind möglich, wie beispielsweise eine NOx-Bestimmung im Abgas nach dem Absorber) ist der Absorber zu regenerieren d. h. von dem beispielsweise als Bariumnitrat eingelagerten NOx zu befreien. Gleichzeitig können hierbei auch (beispielsweise als Bariumsulfat) eingelagerte Oxide des Schwefels entfernt werden. Hierzu wird von dem Steuergerät 4 über den Temperaturfühler 10 geprüft, ob die Temperatur der Absorberbeschichtung für ein Regenerieren hoch genug ist. Sofern die Temperatur unter 500 °C liegt, wird über die Kraftstoffeindüsung 12 in den Abgasstrom Kraftstoff eingedüst, der mit dem im Abgasstrom vorhandenen Sauerstoff katalytisch an der Edelmetallbeschichtung des Absorbers 1 verbrennt, wodurch sich dessen Temperatur erhöht. Alternativ und/oder zusätzlich kann der metallische Trägerkörper des Absorbers 1 über einen Stromfluß (durch 9) elektrisch erhitzt werden (auch andere Temperaturerhöhungen, wie beispielsweise eine induktive Erhitzung des metallischen Trägerkörpers und/oder eine Abgasdrosselung sind möglich).

Sobald der Absorber 1 genügen erhitzt ist, wird ein fettes Gemisch im Abgas eingestellt, d. h. weiterhin Kraftstoff (über 12) eingedüst und/oder durch Einspritzen eines fetten Gemisches in den Zylinder. Hierbei wird vorteilhaft im Ansaugkanal 19 der Brennkraftmaschine 3 eine Drossel 17 über die Steuerung 4 geschlossen, so daß weniger Luft in die Verbrennungskraftmaschine 3 gelangt. Hierdurch reduziert sich der Sauerstoffanteil im Abgasstrom derart, daß das NOx und SOx aus der Absorptionsschicht freigegeben und das NOx auch gleich reduziert wird. Das Ende des Regenerierens kann zeitgesteuert ablaufen aber auch beispielsweise über die Exothermie der Reaktionstemperatur kontrolliert. In einer weiteren Ausgestaltung kann das Regenerieren, wie in der DE 43 42 062 A beschrieben, erfolgen, d h. der Abgasstrom wird vor dem Absorber gedrosselt und insbesondere in einen Bypaß zum Absorber geführt.

Um eventuell noch vorhandene Kohlenwasserstoffe abzubauen, ist nach dem Absorber 1 die Lufteindüsung 13 vorgesehen, die während der Kraftstoffeindüsung (über 12) oder des Betreibens der Brennkraftmaschine mit einem fetten Gemisch von der Steuerung 4 in Betrieb gesetzt wird. Hierdurch werden eventuell noch vorhandene Kohlenwasserstoffe in dem nachgeschalteten Katalysator 8 zu Kohlendioxid und Wasser oxidiert.

Gewünschtenfalls kann die Kraftstoffeindüsung 12 entfallen, da über die Kraftstoffeinspritzung 7 in den Brennraum der Brennkraftmaschine ohne Schwierigkeiten eine genügende Anfettung des Abgasstromes erreicht werden kann.

Da beim Regenerieren die Leistung der Brennkraftmaschine 3 vermindert sein kann, können Maßnahmen vorgesehen werden, daß bei einem völligen Durchtreten des Gasstellmittels für die Brennkraftmaschine das Regenerieren zumindest für einen gewissen Zeitraum unterdrückt wird.

## Patentansprüche

1. Fremdgezündete Brennkraftmaschine oder Dieselbrennkraftmaschine mit einem Abgasstrang, in dem ein Absorber (1) mit einem Trägerkörper angeordnet ist, auf dem eine von einem Abgasstrom umspülbare Absorptionsschicht mit vergrößerter Oberfläche aufgebracht ist, die geeignet ist, mindestens ein Stickoxyd (NOx) und / oder mindestens ein Oxyd des Schwefels (SOx) reversibel zu absorbieren, und einer Steuerung (4), die eine Regeneration des Absorbers durch Einstellen bestimmter Parameter des Abgasstroms steuert, **dadurch gekennzeichnet, dass** zum Aufheizen des Absorbers (1) auf eine für dessen Regeneration geeignete Temperatur der Trägerkörper aus Metall ist und durch Beaufschlagung mit einem elektrischen Strom beheizbar ist.

2. Brennkraftmaschine nach Anspruch 1, **dadurch gekennzeichnet, dass** das Metall ein Metallblech bzw. eine Metallfolie ist.

3. Brennkraftmaschine nach Anspruch 1 oder 2, **dadurch gekennzeichnet, dass** der Trägerkörper eine Wandstärke ≤ 0,1 mm hat, insbesondere ≤ 0,05 mm.

4. Brennkraftmaschine nach einem der vorhergehenden Ansprüche, **dadurch gekennzeichnet, dass** der Trägerkörper eine Vielzahl parallel verlaufender Kanäle (16) mit geschlossenem Querschnitt enthält, die innen die Absorptionsschicht aufweisen und durch die der Gasstrom führbar ist.

5. Brennkraftmaschine nach einem der vorhergehenden Ansprüche, **dadurch gekennzeichnet, dass** die vergrößerte Oberfläche mindestens 20 m²/g, insbesondere mindestens 40 m²/g und besonders vorteilhaft mindestens 100 m²/g hat, bezogen auf die von dem Gasstrom erreichbare Masse der Absorptionsschicht.

6. Brennkraftmaschine nach einem der vorhergehenden Ansprüche, **dadurch gekennzeichnet, dass** die Absorptionsschicht ein Aluminiumoxyd. insbesondere γ-Aluminiumoxyd enthält.

7. Brennkraftmaschine nach einem der vorhergehenden Ansprüche, **dadurch gekennzeichnet, dass** die Absorptionsschicht ein Element aus der Gruppe der Alkalimetalle, Erdalkalimetalle, seltenen Erden, Lanthan, Titan, Kupfer und / oder Mangan enthält.

8. Brennkraftmaschine nach Anspruch 7, **dadurch gekennzeichnet, dass** die Absorptionsschicht mindestens eines der Elemente Barium, Natrium, Kalium enthält.

9. Brennkraftmaschine nach einem der vorhergehenden Ansprüche, **dadurch gekennzeichnet, dass** die Absorptionsschicht NOx und / oder SOx aus einem Abgas einer mager betriebenen Verbrennungskraftmaschine (3) bei Sauerstoffüberschuss absorbiert.

10. Brennkraftmaschine nach einem der vorhergehenden Ansprüche, **dadurch gekennzeichnet, dass** die Absorptionsschicht NOx und / oder SOx in einer reduzierten Atmosphäre und / oder bei niedriger Sauerstoffkonzentration freisetzt.

11. Brennkraftmaschine nach Anspruch 9 und / oder 10, **dadurch gekennzeichnet, dass** eine Sauerstoffkonzentrations-Bestimmungseinrichtung, die die Sauerstoffkonzentration bzw. eine die Sauerstoffkonzentration enthaltende Größe ermittelt, vorgesehen ist, die die Sauerstoffkonzentration bzw. die diese enthaltende Größe als eine Eingangsgröße an die Steuerung gibt, die ein Beladen bzw. Entladen des Absorbers (1) veranlasst.

12. Brennkraftmaschine nach einem der vorhergehenden Ansprüche, **dadurch gekennzeichnet, dass** die Absorptionsschicht NOx und / oder SOx bei erhöhter Temperatur freisetzt.

13. Brennkraftmaschine nach Anspruch 12, **gekennzeichnet durch** eine Temperatur-Bestimmungseinrichtung (10), die die Temperatur bzw. eine die Temperatur enthaltende Größe des Gasstroms und / oder der Absorptionsschicht und / oder des Trägerkörpers ermittelt und die die Temperatur bzw. die diese enthaltende Größe als Eingangsgröße an die Steuerung (4) gibt, die ein Beladen bzw. Entladen des Absorbers (1) veranlasst.

14. Brennkraftmaschine nach Anspruch 12 und 13, **dadurch gekennzeichnet, dass** die Steuerung (4) die Sauerstoffkonzentration und die Temperatur bzw. die diese enthaltenden Größen als Eingangsgrößen hat.

15. Brennkraftmaschine nach einem der vorhergehenden Ansprüche, **dadurch gekennzeichnet, dass** die Absorptionsschicht eine Dicke von mindestens 25 µm, insbesondere mindestens 35 µm hat.

16. Brennkraftmaschine nach einem der vorhergehenden Ansprüche, **dadurch gekennzeichnet, dass** die Absorptionsschicht im washcoat ist.

17. Brennkraftmaschine nach einem der vorhergehenden Ansprüche, **dadurch gekennzeichnet, dass** die Absorptionsschicht mindestens ein Edelmetall trägt.

18. Brennkraftmaschine nach Anspruch 17, **dadurch gekennzeichnet, dass** die Absorptionsschicht mit dem Edelmetall einen Oxydationskatalysator bzw. einen Dreiwegekatalysator bildet.

19. Brennkraftmaschine nach einem der vorhergehenden Ansprüche, **dadurch gekennzeichnet, dass** die Absorptionsschicht ein Porenvolumen von mindestens 0,2 cm³/g hat, bezüglich der von dem Gasstrom anströmbaren Masse.

20. Brennkraftmaschine nach einem der vorhergehenden Ansprüche, **dadurch gekennzeichnet, dass** dem Absorber (1) ein Oxydationskatalysator, insbesondere ein Dreiwegekatalysator (8) als eigenständige Einheit vor- und / oder nachgeschaltet ist.

21. Verfahren zur Steuerung eines in einem Abgasstrang einer fremdgezündeten Brennkraftmaschine oder einer Dieselbrennkraftmaschine (3) angeordneten Absorbers (1) mit den Schritten:
- Betreiben der Brennkraftmaschine (3) unter Bildung eines sauerstoffhaltigen Abgasstromes;
- Führen des sauerstoffhaltigen Abgasstromes über eine Absorptionsschicht für NOx, wobei ein Trägerkörper aus Metall eingesetzt wird.
- Speichern des NOx in der Absorptionsschicht;
- Erhitzen der Absorptionsschicht mindestens auf eine vorbestimmte Temperatur durch Beaufschlagung des Trägerkörpers mit elektrischen Strom während des Betriebs der Verbrennungskraftmaschine (3) vor, gleichzeitig oder nach
- Bilden eines sauerstoffarmen Abgasstroms bzw. eines Abgasstroms mit einem stöchiometrischen Überschuss an Reduktionsmittel;
- Desorbieren des NOx von der Absorptionsschicht unter Reduktion des NOx in dem sauerstoffarmen Abgasstrom bzw. in dem Abgasstrom mit einem stöchiometrischen Überschuss an Reduktionsmittel während die Absorptionsschicht mindestens die vorbestimmte Temperatur hat;
- Bilden wieder eines sauerstoffhaltigen Abgasstroms;
- Beenden des Erhitzens der Absorptionsschicht auf die vorbestimmte Temperatur vor, gleichzeitig oder nach dem vorhergenannten Schritt; und
- Wiederholen der Schritte ab: - Speichern des NOx in der Absorptionsschicht;

22. Verfahren nach Anspruch 21, **dadurch gekennzeichnet, dass** das Erhitzen der Absorptionsschicht femer durch eine Kraftstoffeinspritzung in den Abgasstrom und katalytische Verbrennung desselben und / oder durch Veränderung des Betriebszustandes der Verbrennungskraftmaschine und / oder durch eine Brennerbeheizung des Abgasstromes erreicht wird.

23. Verfahren nach Anspruch 21 oder 22, **dadurch gekennzeichnet, dass** vor dem Schritt:
- Erhitzen des Absorbers (1) mindestens auf eine vorbestimmte Temperatur durch Beaufschlagung des Trägerkörpers mit elektrischen Strom während des Betriebs der Verbrennungskraftmaschine (3) vor, gleichzeitig oder nach
ein Schritt:
- Ermitteln, ob der Absorber (1) und / oder eine in Temperaturbeziehung zu dem Absorber (1) stehende Sache mindestens die vorbestimmte Temperatur hat,
durchgeführt wird, und dass die Schritte:
- Erhitzen des Absorbers (1) mindestens auf eine vorbestimmte Temperatur durch Beaufschlagung des Trägerkörpers mit elektrischen Strom während des Betriebs der Verbrennungskraftmaschine (3) vor, gleichzeitig oder nach
- Beenden des Erhitzens des Absorbers (1) auf die vorbestimmte Temperatur vor, gleichzeitig oder nach dem vorhergenannten Schritt; und
entfallen, wenn bei dem Ermitteln festgestellt wird, dass der Absorptionsschicht und / oder die in Temperaturbeziehung zu der Absorptionsschicht stehende Sache mindestens die vorbestimmte Temperatur hat.

24. Verfahren nach einem der Ansprüche 21 bis 23, **dadurch gekennzeichnet, dass** neben NOx auch mindestens ein Oxyd des Schwefels (SOx) während der Verfahrensschritte von dem Absorber (1) gespeichert bzw. desorbiert wird.

25. Verfahren nach einem der Ansprüche 21 bis 24, **dadurch gekennzeichnet, dass** das Desorbieren zeit- und / oder beladungsabhängig von der Absorptionsschicht erfolgt.

26. Verfahren nach einem der Ansprüche 21 bis 25, **dadurch gekennzeichnet, dass** die Absorptionsschicht γ-Aluminiumoxyd und mindestens ein Element aus der Gruppe der Alkalimetalle, Erdalkalimetalle, seltenen Erden und / oder Lanthan enthält.

27. Verfahren nach einem der Ansprüche 21 bis 26, **dadurch gekennzeichnet, dass** der Abgasstrom über einen die Absorptionsschicht tragenden Trägerkörper mit einer Vielzahl parallel verlaufender Kanäle (16) geführt wird.

## Claims

1. Spark-ignition internal combustion engine or diesel internal combustion engine having an exhaust section in which there is arranged an absorber (1) having a support body, to which an absorption layer with an increased surface area around which an exhaust-gas stream can flow is applied, which absorption layer is suitable for reversible absorption of at least one nitrogen oxide (NOx) and/or at least one sulphur oxide (SOx), and a control unit (4), which controls the regeneration of the absorber by setting certain parameters of the exhaust-gas stream, **characterized in that** in order to heat the absorber (1) to a temperature which is suitable for its regeneration, the support body is made from metal and can be heated by the application of an electric current.

2. Internal combustion engine according to Claim 1, **characterized in that** the metal is a metal sheet or a metal foil.

3. Internal combustion engine according to Claim 1 or 2, **characterized in that** the support body has a wall thickness of ≤ 0.1 mm, in particular ≤ 0.05 mm.

4. Internal combustion engine according to one of the preceding claims, **characterized in that** the support body has a multiplicity of passages (16) which run parallel to one another, have a closed cross section, have the absorption layer on the inner side and through which the gas stream can be guided.

5. Internal combustion engine according to one of the preceding claims, **characterized in that** the enlarged surface area amounts to at least 20 m²/g, in particular at least 40 m²/g and particularly advantageously at least 100 m²/g, based on the mass of the absorption layer which can be reached by the gas stream.

6. Internal combustion engine according to one of the, preceding claims, **characterized in that** the absorption layer contains an aluminium oxide, in particular γ-aluminium oxide.

7. Internal combustion engine according to one of the preceding claims, **characterized in that** the absorption layer contains an element selected from the group consisting of the alkali metals, alkaline-earth metals, rare earths, lanthanum, titanium, copper and/or manganese.

8. Internal combustion engine according to Claim 7, **characterized in that** the absorption layer contains at least one of the elements barium, sodium, potassium.

9. Internal combustion engine according to one of the preceding claims, **characterized in that** the absorption layer absorbs NOx and/or SOx from an exhaust gas from an internal combustion engine (3) which is operated under lean-burn mode with an excess of oxygen.

10. Internal combustion engine according to one of the preceding claims, **characterized in that** the absorption layer releases NOx and/or SOx in a reducing atmosphere and/or when there is a low oxygen concentration.

11. Internal combustion engine according to Claim 9 and/or 10, **characterized in that** an oxygen concentration-determining device, which determines the oxygen concentration or a variable which includes the oxygen concentration, is provided, which device transmits the oxygen concentration or the variable including this concentration as an input variable to the control unit, which initiates loading or unloading of the absorber (1).

12. Internal combustion engine according to one of the preceding claims, **characterized in that** the absorption layer releases NOx and/or SOx at an elevated temperature.

13. Internal combustion engine according to Claim 12, **characterized by** a temperature-determining device (10), which determines the temperature, or a variable which includes the temperature, of the gas stream and/or of the absorption layer and/or of the support body and transmits the temperature or the variable which includes the temperature as an input variable to the control unit (4), which initiates loading or unloading of the absorber (1).

14. Internal combustion engine according to Claims 12 and 13, **characterized in that** the control unit (4) has as input variables the oxygen concentration and the temperature or the variables which include them.

15. Internal combustion engine according to one of the preceding claims, **characterized in that** the absorption layer has a thickness of at least 25 µm, in particular at least 35 µm.

16. Internal combustion engine according to one of the preceding claims, **characterized in that** the absorption layer is in the washcoat.

17. Internal combustion engine according to one of the preceding claims, **characterized in that** the absorption layer bears at least one precious metal.

18. Internal combustion engine according to Claim 17, **characterized in that** the absorption layer forms an oxidation catalyst or a three-way catalyst with the precious metal.

19. Internal combustion engine according to one of the preceding claims, **characterized in that** the absorption layer has a pore volume of at least 0.2 cm³/g, based on the mass which the gas stream is able to flow to.

20. Internal combustion engine according to one of the preceding claims, **characterized in that** an oxidation catalytic converter, in particular a three-way catalytic converter (8) as an independent unit is connected upstream and/or downstream of the absorber (1).

21. Method for controlling an absorber (1) arranged in an exhaust section of a spark-ignition internal combustion engine or a diesel internal combustion engine (3), comprising the steps of:
- operating the internal combustion engine (3) so as to form an oxygen-containing exhaust-gas stream;
- guiding the oxygen-containing exhaust-gas stream over an absorption layer for NOx, with a metal support body being used;
- storing the NOx in the absorption layer;
- heating the absorption layer at least to a predetermined temperature by applying electric current to the support body while the internal combustion engine (3) is operating, before, at the same time as or after
- forming a low-oxygen exhaust-gas stream or an exhaust-gas stream with a stoichiometric excess of reducing agent;
- desorbing the NOx from the absorption layer, with the NOx being reduced in the low-oxygen exhaust-gas stream or in the exhaust-gas stream with a stoichiometric excess of reducing agent while the absorption layer is at least at the predetermined temperature;
- forming an oxygen-containing exhaust-gas stream again;
- ending the heating of the absorption layer to the predetermined temperature, before, at the same time as or after the above step; and
- repeating the steps from: - storing the NOx in the absorption layer.

22. Method according to Claim 21, **characterized in that** the heating of the absorption layer is furthermore achieved by an injection of fuel into the exhaust-gas stream and catalytic combustion thereof and/or changing the operating state of the internal combustion engine and/or by burner heating of the-exhaust-gas stream.

23. Method according to Claim 21 or 22, **characterized in that** before the step of:
- heating the absorber (1) at least to a predetermined temperature by applying electric current to the support body while the internal combustion engine (3) is operating, before, at the same time as or after
a step of:
- determining whether the absorber (1) and/or an item whose temperature is related to that of the absorber (1) is at least at the predetermined temperature,
is carried out, and **in that** the steps of:
- heating the absorber (1) at least to a predetermined temperature by applying electric current to the support body during operation of the internal combustion engine (3), before, at the same time as or after
- ending the heating of the absorber (1) to the predetermined temperature, before, at the same time as or after the above steps; and
are dispensed with, if, during the determination step, it is detected that the absorption layer and/or the item whose temperature is related to that of the absorption layer is at least at the predetermined temperature.

24. Method according to one of Claims 21 to 23, **characterized in that** in addition to NOx, at least one sulphur oxide (SOx) is also stored by and desorbed from the absorber (1) during the method steps.

25. Method according to one of Claims 21 to 24, **characterized in that** the desorption takes place as a function of time and/or of the loading of the absorption layer.

26. Method according to one of Claims 21 to 25, **characterized in that** the absorption layer contains γ-aluminium oxide and at least one element selected from the group consisting of the alkali metals, alkaline-earth metals, rare earths and/or lanthanum.

27. Method according to one of Claims 21 to 26, **characterized in that** the exhaust-gas stream is guided over a support body which bears the absorption layer and has a multiplicity of passages (16) running in parallel.

## Revendications

1. Moteur à combustion interne à allumage par étincelle ou moteur diesel avec une colonne de gaz d'échappement, dans laquelle est disposé un absorbeur (1) avec un corps de support, sur lequel est déposée une couche d'absorption avec une surface accrue balayée par un courant de gaz d'échappement, qui est apte à absorber de façon réversible au moins un oxyde d'azote (NOx) et/ou au moins un oxyde de soufre (SOx), et avec une commande (4), qui commande une régénération de l'absorbeur par le réglage de certains paramètres du courant de gaz d'échappement, **caractérisé en ce que** le corps de support est en métal et peut être chauffé en le soumettant à un courant électrique pour chauffer l'absorbeur (1) à une température appropriée pour sa régénération.

2. Moteur à combustion interne suivant la revendication 1, **caractérisé en ce que** le métal est une tôle métallique ou une feuille métallique.

3. Moteur à combustion interne suivant la revendication 1 ou 2, **caractérisé en ce que** le corps de support présente une épaisseur de paroi ≤ 0,1 mm, en particulier ≤ 0,05 mm.

4. Moteur à combustion interne suivant l'une quelconque des revendications précédentes, **caractérisé en ce que** le corps de support comporte une pluralité de canaux orientés parallèlement (16), avec une section transversale fermée, qui présentent intérieurement la couche d'absorption et à travers lesquels le courant de gaz peut être conduit.

5. Moteur à combustion interne suivant l'une quelconque des revendications précédentes, **caractérisé en ce que** la surface accrue a au moins 20 m²/g, en particulier au moins 40 m²/g et de façon particulièrement avantageuse au moins 100 m²/g, rapportés à la masse de la couche d'absorption pouvant être atteinte par le courant de gaz.

6. Moteur à combustion interne suivant l'une quelconque des revendications précédentes, **caractérisé en ce que** la couche d'absorption contient un oxyde d'aluminium, en particulier de l'oxyde d'aluminium γ.

7. Moteur à combustion interne suivant l'une quelconque des revendications précédentes, **caractérisé en ce que** la couche d'absorption contient un élément du groupe des métaux alcalins, des métaux alcalino-terreux, des terres rares, lanthane, titane, cuivre et/ou manganèse.

8. Moteur à combustion interne suivant la revendication 7, **caractérisé en ce que** la couche d'absorption contient au moins un des éléments baryum, sodium, potassium.

9. Moteur à combustion interne suivant l'une quelconque des revendications précédentes, **caractérisé en ce que** la couche d'absorption absorbe les NOx et/ou les SOx de gaz d'échappement d'un moteur à combustion interne (3) fonctionnant avec un mélange pauvre en présence d'un excès d'oxygène.

10. Moteur à combustion interne suivant l'une quelconque des revendications précédentes, **caractérisé en ce que** la couche d'absorption libère des NOx et/ou des SOx dans une atmosphère réductrice et/ou sous une faible concentration en oxygène.

11. Moteur à combustion interne suivant la revendication 9 et/ou 10, **caractérisé en ce qu'**il est prévu un dispositif de détermination de la concentration en oxygène, qui détermine la concentration en oxygène, respectivement une grandeur contenant la concentration en oxygène, qui envoie la concentration en oxygène, respectivement la grandeur qui la contient, comme grandeur d'entrée à la commande, qui provoque un chargement, respectivement un déchargement de l'absorbeur (1).

12. Moteur à combustion interne suivant l'une quelconque des revendications précédentes, **caractérisé en ce que** la couche d'absorption libère des NOx et/ou des SOx à une température plus élevée.

13. Moteur à combustion interne suivant la revendication 12, **caractérisé par** un dispositif de détermination de la température (10), qui détermine la température, respectivement une grandeur contenant la température du courant de gaz et/ou de la couche d'absorption et/ou du corps de support et qui envoie la température, respectivement la grandeur qui la contient, comme grandeur d'entrée à la commande (4), qui provoque un chargement, respectivement un déchargement de l'absorbeur (1).

14. Moteur à combustion interne suivant les revendications 12 et 13, **caractérisé en ce que** la commande (4) a comme grandeurs d'entrée la concentration en oxygène et la température, respectivement les grandeurs qui les contiennent.

15. Moteur à combustion interne suivant l'une quelconque des revendications précédentes, **caractérisé en ce que** la couche d'absorption a une épaisseur d'au moins 25 µm, en particulier d'au moins 35 µm.

16. Moteur à combustion interne suivant l'une quelconque -des revendications précédentes, **caractérisé en ce que** la couche d'absorption est en imprégnateur.

17. Moteur à combustion interne suivant l'une quelconque des revendications précédentes, **caractérisé en ce que** la couche d'absorption porte au moins un métal noble.

18. Moteur à combustion interne suivant la revendication 17, **caractérisé en ce que** la couche d'absorption forme avec le métal noble un catalyseur d'oxydation respectivement un catalyseur à trois voies.

19. Moteur à combustion interne suivant l'une quelconque des revendications précédentes, **caractérisé en ce que** la couche d'absorption présente un volume de pores d'au moins 0,2 cm³/g, par rapport à la masse accessible par le courant de gaz.

20. Moteur à combustion interne suivant l'une quelconque des revendications précédentes, **caractérisé en ce qu'**un catalyseur d'oxydation, en particulier un catalyseur à trois voies (8), constituant une unité autonome est installé avant et/ou après l'absorbeur (1).

21. Procédé pour commander un absorbeur (1) disposé dans une colonne de gaz d'échappement d'un moteur à combustion interne à allumage par étincelle ou d'un moteur diesel (3), comprenant les étapes suivantes:
- fonctionnement du moteur à combustion interne (3) avec formation d'un courant de gaz d'échappement contenant de l'oxygène;
- guidage du courant de gaz d'échappement contenant de l'oxygèn sur une couche d'absorption pour les NOx, dans lequel on utilise un corps de support en métal;
- accumulation des NOx dans la couche d'absorption;
- chauffage de la couche d'absorption au moins à une température prédéterminée en soumettant le corps de support à un courant électrique pendant le fonctionnement du moteur à combustion interne (3) avant, en même temps ou après
- formation d'un courant de gaz d'échappement pauvre en oxygène, respectivement d'un courant de gaz d'échappement avec un excédent stoechiométrique en agent réducteur;
- désorption des NOx de la couche d'absorption avec réduction des NOx dans le courant de gaz d'échappement pauvre en oxygène, respectivement dans le courant de gaz d'échappement avec un excédent stoechiométrique en agent réducteur, pendant que la couche d'absorption a au moins la température prédéterminée;
- de nouveau formation d'un courant de gaz d'échappement contenant de l'oxygène;
- arrêt du chauffage de la couche d'absorption à la température prédéterminée avant, en même temps ou après l'étape précitée; et
- répétition des étapes à partir de l'accumulation des NOx dans la couche d'absorption.

22. Procédé suivant la revendication 21, **caractérisé en ce que** le chauffage de la couche d'absorption est obtenu en outre par une injection de carburant dans le courant de gaz d'échappement et la combustion catalytique de celui-ci et/ou par la modification de l'état de fonctionnement du moteur à combustion interne et/ou par un chauffage par brûleur du courant de gaz d'échappement.

23. Procédé suivant la revendication 21 ou 22,
**caractérisé en ce qu'**avant l'étape de
- chauffage de l'absorbeur (1) au moins à une température prédéterminée en soumettant le corps de support à un courant électrique pendant le fonctionnement du moteur à combustion interne (3) avant, en même temps ou après
on effectue une étape de
- détermination que l'absorbeur (1) et/ou un élément se trouvant en relation de température avec l'absorbeur (1) a au moins la température prédéterminée,
et **en ce que** les étapes de
- chauffage de l'absorbeur (1) au moins à une température prédéterminée en soumettant le corps de support à un courant électrique pendant le fonctionnement du moteur à combustion interne (3) avant, en même temps ou après
- arrêt du chauffage de l'absorbeur (1) à la température prédéterminée avant, en même temps ou après l'étape précitée
sont supprimées, lorsque l'on constate, lors de la détermination, que la couche d'absorption et/ou l'élément se trouvant en relation de température avec la couche d'absorption a au moins la température prédéterminée.

24. Procédé suivant l'une quelconque des revendications 21 à 23, **caractérisé en ce qu'**en plus des NOx, au moins un oxyde de soufre (SOx) est également accumulé, respectivement désorbé par/de l'absorbeur (1) pendant les étapes du procédé.

25. Procédé suivant l'une quelconque des revendications 21 à 24, **caractérisé en ce que** la désorption de la couche d'absorption est effectuée en fonction du temps et/ou de la charge.

26. Procédé suivant l'une quelconque des revendications 21 à 25, **caractérisé en ce que** la couche d'absorption contient de l'oxyde d'aluminium γ et au moins un élément du groupe des métaux alcalins, des métaux alcalino-terreux, des terres rares et/ou du lanthane.

27. Procédé suivant l'une quelconque des revendications 21 à 26, **caractérisé en ce que** le courant de gaz d'échappement est guidé sur un corps de support portant la couche d'absorption, et présentant une pluralité de canaux orientés parallèlement (16).
